# EUROPEAN PATENT APPLICATION

(11) **EP 4 797 385 A1**
(43) Date of publication of application: **26.08.2026**
(21) Application number: 24878357.3
(22) Date of filing: 29.02.2024
(51) Int. Cl.: H01M 10/615, H02J 3/32

(54) **BATTERY HEATING SYSTEM FOR HOUSEHOLD ENERGY-STORAGE INTEGRATED MACHINE**

(30) Priority: 17.10.2023 CN 202322786290 U
(71) Applicant: Sungrow Power Supply Co., Ltd., Hefei, Anhui 230088 (CN)
(72) Inventor: DONG, Wengong, Hefei, Anhui 230088 (CN); CHEN, Fei, Hefei, Anhui 230088 (CN); CHEN, Qiangdong, Hefei, Anhui 230088 (CN); LI, Xuteng, Hefei, Anhui 230088 (CN); CAO, Ying, Hefei, Anhui 230088 (CN); JIN, Yongwei, Hefei, Anhui 230088 (CN)
(74) Representative: Zacco Norway AS
(86) International application number: PCT/CN2024/079231
(87) International publication number: WO 2025/081700

(57) **Abstract**

A battery heating system for a household energy-storage integrated machine comprises: a battery (102), a heating film (104), a first switch (105), a circuit breaker (103), a power conversion system (106) and a direct-current bus (107), wherein the power conversion system (106) is used for supplying a direct current to the battery heating system by means of the direct-current bus (107), and is further used for adjusting the voltage of the direct-current bus (107); the circuit breaker (103) is used for controlling the state of connection between the battery (102) and the direct-current bus (107); the first switch (105) is used for controlling the state of connection between the heating film (104) and the direct-current bus (107); and the heating film (104) is used for heating the battery (102). The power conversion system (106) and the direct-current bus (107) are provided in the battery heating system for a household energy-storage integrated machine, and therefore when it is necessary to use the heating film (104) to heat the battery (102), a power grid can be used for supplying power, and a direct current can also be used during a power grid outage, so as to heat the battery (102), thus meeting the battery heating requirement in case of a power grid outage.

## Description

This application claims the priority to Chinese Patent Application No. 202322786290.4, titled "BATTERY HEATING SYSTEM FOR HOUSEHOLD ENERGY-STORAGE INTEGRATED MACHINE", filed on October 17, 2023 with the China National Intellectual Property Administration, which is incorporated herein by reference in its entirety.

### FIELD

The present disclosure relates to the field of energy storage battery heating technology, and in particular to a system for heating a battery of an integrated household energy-storage machine.

### BACKGROUND

With the advancement of sustainable development strategies, environmentally friendly energy-storage lithium batteries are increasingly being utilized. However, the energy-storage lithium batteries are sensitive to low-temperature environments, and charging in low-temperature environments may cause irreversible damage to the batteries. Thus, it is required to heat the batteries before charging in low-temperature environments, and then charge the batteries after the batteries reach a certain temperature.

Therefore, how to heat the energy-storage lithium batteries is an issue to be addressed.

### SUMMARY

In view of this, a system for heating a battery of an integrated household energy-storage machine is provided according to the present disclosure, to heat energy-storage lithium batteries.

According to an embodiment of the present disclosure, a system for heating a battery of an integrated household energy-storage machine is provided. The system includes: a battery, a heating film, a first switch, a circuit breaker, a power conversion system, and a direct-current bus. The first switch and the heating film are connected in series to form a first branch. A first terminal of the battery, a first terminal of the circuit breaker, a first terminal of the first branch, and a first terminal of the power conversion system are sequentially connected. A second terminal of the battery, a second terminal of the circuit breaker, a second terminal of the first branch, and a second terminal of the power conversion system are sequentially connected to the direct-current bus. The power conversion system is configured to supply a direct-current power to the system through the direct-current bus, and regulate a voltage of the direct-current bus. The circuit breaker is configured to control a connection state of the battery and the direct-current bus. The first switch is configured to control a connection state of the heating film and the direct-current bus. The heating film is configured to heat the battery.

In an embodiment, the system further includes a fuse. The fuse is connected in series between the heating film and the first switch. The fuse is configured to provide short-circuit protection for the heating film.

In an embodiment, the system further includes: a second switch, a first voltage detection unit, and a second voltage detection unit. The second switch is connected in series with the heating film, and the heating film is connected in series between the first switch and the second switch. The first voltage detection unit is connected in parallel with the power conversion system, a first terminal of the first voltage detection unit is connected to the first terminal of the power conversion system, and a second terminal of the first voltage detection unit is connected to the second terminal of the power conversion system. The second voltage detection unit is connected in parallel with the heating film.

In an embodiment, the system further includes: a first current sensor. A first terminal of the first current sensor is connected to the first terminal of the first voltage detection unit, and a second terminal of the first current sensor is connected to the first terminal of the power conversion system.

In an embodiment, the system further includes: a second current sensor. The second current sensor is connected in series in the first branch.

In an embodiment, the system further includes: a third switch. A first terminal of the third switch is connected to the first terminal of the circuit breaker, and a second terminal of the third switch is connected to the first terminal of the first branch.

In an embodiment, the system further includes: a third voltage detection unit. The third voltage detection unit is connected in parallel with the circuit breaker, and a first terminal of the third voltage detection unit is connected between the first terminal of the circuit breaker and the first terminal of the third switch.

In an embodiment, the system further includes: a third current sensor. The third current sensor is connected in series with the third switch.

In an embodiment, the heating film includes multiple sub-heating films connected in series in the first branch.

In an embodiment, the heating film includes multiple sub-heating films connected in parallel.

In an embodiment, the first switch is a circuit breaker, a MOS device, or an IGBT device.

Compared with the related technology, the present disclosure has the following beneficial effects.

According to the present disclosure, a system for heating a battery of an integrated household energy-storage machine is provided. The system includes: a battery, a heating film, a first switch, a circuit breaker, a power conversion system, and a direct-current bus. The first switch and the heating film are connected in series to form a first branch. A first terminal of the battery, a first terminal of the circuit breaker, a first terminal of the first branch, and a first terminal of the power conversion system are sequentially connected. A second terminal of the battery, a second terminal of the circuit breaker, a second terminal of the first branch, and a second terminal of the power conversion system are sequentially connected to the direct-current bus. The power conversion system is configured to supply a direct-current power to the system via the direct-current bus, and regulate a voltage of the direct-current bus. The circuit breaker is configured to control a connection state of the battery and the direct-current bus. The first switch is configured to control a connection state if the heating film and the direct-current bus. The heating film is configured to heat the battery. Therefore, a power conversion system and a direct-current bus are arranged in the system for heating the battery of the integrated household energy-storage machine, so that the battery can be heated by using the power supplied from a power grid, or the battery can be heated by using the direct-current power when grid outages, thereby meeting the requirement for heating battery during power grid outages. Furthermore, the power conversion system can regulate the voltage of the direct-current bus, so that the heating power of the heating film can be regulated, thereby ensuring a stable, safe, and controllable heating process for the battery.

### BRIEF DESCRIPTION OF THE DRAWINGS

To clearly illustrate technical solutions in embodiments of the present disclosure or in related technology, drawings to be used in description of the embodiments of the present disclosure or the related technology are briefly introduced hereinafter. Apparently, the drawings in the following descriptions are only some embodiments of the present disclosure, and other drawings may be obtained by those skilled in the art based on the provided drawings without any creative efforts.
FIG. 1 is a schematic structural diagram of a system for heating a battery of an integrated household energy-storage machine according to an embodiment of the present disclosure;
FIG. 2 is a schematic structural diagram of a system for heating a battery of an integrated household energy-storage machine with multiple heating films connected in series according to an embodiment of the present disclosure;
FIG. 3 is a schematic structural diagram of a system for heating a battery of an integrated household energy-storage machine with multiple heating films connected in parallel according to an embodiment of the present disclosure; and
FIG. 4 is a schematic structural diagram of a system for heating a battery of an integrated household energy-storage machine according to another embodiment of the present disclosure.

### DETAILED DESCRIPTION

To enable those skilled in the art to understand the technical solutions according to the present disclosure, the technical solutions in the embodiments of the present disclosure are described clearly and completely hereinafter with reference to the drawings in the embodiments of the present disclosure. Apparently, the described embodiments are only some of the embodiments according to the present disclosure, rather than all of the embodiments. Based on the embodiments of the present disclosure, all other embodiments obtained by those skilled in the art without making any creative effort fall within the protection scope of the present disclosure.

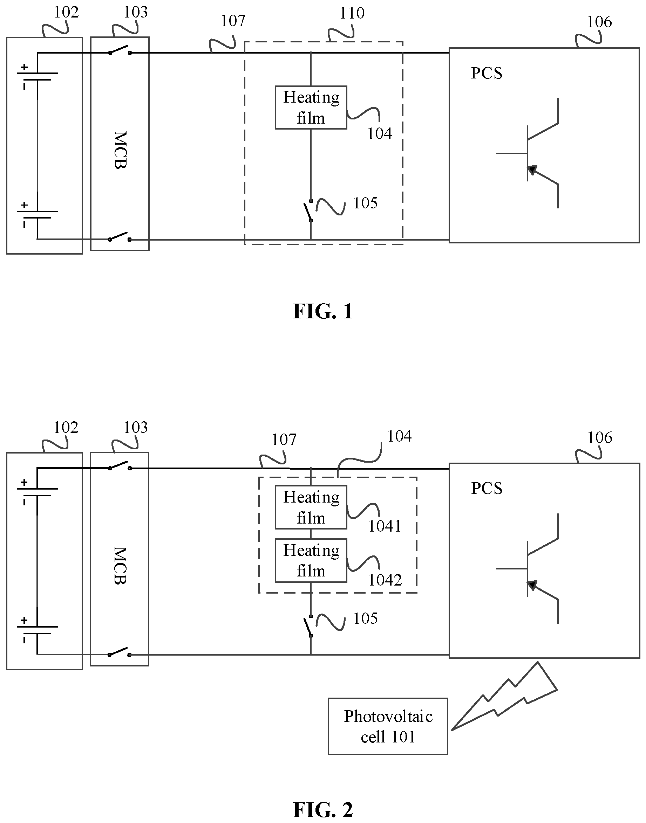

Reference is made to FIG. 1, which is a schematic structural diagram of a system for heating a battery of an integrated household energy-storage machine according to an embodiment of the present disclosure. The system includes: a battery 102, a circuit breaker 103, a heating film 104, a first switch 105, a power conversion system 106, and a direct-current bus 107.

The first switch 105 and the heating film 104 are connected in series to form a first branch 110. A first terminal of the battery 102, a first terminal of the circuit breaker 103, a first terminal of the first branch 110, and a first terminal of the power conversion system 106 are connected. A second terminal of the battery 102, a second terminal of the circuit breaker 103, a second terminal of the first branch 110, and a second terminal of the power conversion system 106 are connected to the direct-current bus 107.

The power conversion system 106 is configured to supply a direct-current power to the system through the direct-current bus, and regulate a voltage of the direct-current bus.

In an embodiment, the direct-current power may be supplied by a photovoltaic cell or other power supply devices which is electrically connected to the power conversion system 106. For example, the direct-current power may be supplied from a storage battery.

The integrated household energy-storage machine integrates a photovoltaic power generation system and an energy storage system. The users may use the photovoltaic power generation system to directly supply power for homes, that is, self-generation and self-consumption, thereby reducing reliance on grid power, and even relying entirely on the photovoltaic power generation system to meet household power requirements. In addition to providing the energy storage and backup function, the integrated household energy-storage machine can feed surplus power back to the power grid, and the users can earn corresponding revenue, so that the integrated household energy-storage machine are increasingly popular among users.

The power conversion system (PCS) may be configured to control the charging and discharging of photovoltaic cells (storage batteries). The direct-current power generated by photovoltaic power generation is converted to an alternating-current power by using an inverter. In response to requirement of storing some of the electrical energy in a photovoltaic cell, the power conversion system may be used to convert the alternating-current power to a direct-current power for charging. In response to requirement of using the stored electrical energy, the power conversion system may be used to convert the direct-current power from the photovoltaic cell to an alternating-current power to supply for a load or be fed to the power grid. In addition, the power conversion system may regulate the voltage of the direct-current bus, thereby regulating the heating power of the heating film 104 in the system for heating a battery of an integrated household energy-storage machine.

In an embodiment, the system for heating a battery of an integrated household energy-storage machine may obtain power from the power grid or from a photovoltaic cell or a storage battery. In the embodiments of the present disclosure, the power conversion system 106 and the direct-current bus 107 are arranged in the system for heating a battery of an integrated household energy-storage machine. Thus, when it is required to heat the battery 102 by using the heating film 104, the power from the power grid may be utilized, the power stored in the photovoltaic cell may be utilized, and the power provided by other power supply devices, such as storage batteries, that are electrically connected to the power conversion system 106 may be utilized. Therefore, even in the event of grid outages, direct-current power can still be obtained to heat the battery 102, meeting the requirements of heating battery during grid outages.

Additionally, the power conversion system 106 may further regulate the voltage of the direct-current bus, so that the heating power of the heating film 104 can be regulated, thereby ensuring that the heating process for the battery 102 is stable, safe, and controllable.

The circuit breaker 103 is configured to control a connection state of the battery and the direct-current bus.

For example, the circuit breaker may be a direct-current miniature circuit breaker (MCB), and is configured to control the on/off state of the output circuit where the battery 102 is located and to provide overcurrent protection for the output circuit.

The first switch 105 is configured to control a connection state of the heating film and the direct-current bus.

For example, the first switch 105 may be a relay, a MOS device, an IGBT device, or any other device capable of performing a switching function. When the first switch 105 is turned off, the connection state of the heating film 104 and the direct-current bus 107 is a disconnected state; and when the first switch 105 is turned on, the connection state of the heating film 104 and the direct-current bus 107 is a connected state.

The heating film 104 is configured to heat the battery.

In an embodiment, the heating film 104 may be a single heating film, or may include multiple sub-heating films connected in series in the first branch, or may include multiple sub-heating films connected in parallel, or may include a sub-heating film connected in the first branch and one or more sub-heating films connected in parallel with the first branch. The first branch may include one or more heating films, and each branch connected in parallel with the first branch may include one or more heating films.

Reference is made to FIG. 2, which is a schematic structural diagram of a system for heating a battery of an integrated household energy-storage machine with multiple heating films connected in series according to an embodiment of the present disclosure. The heating film 104 includes multiple sub-heating films connected in series in the first branch, such as 1041 and 1042. Typically, an energy storage battery module includes multiple battery cells that are connected in series or/and connected in parallel. The battery cells are located at different positions in the battery pack, and the heat dissipation effects are different at different positions. Generally, the cells located in the central region of the battery pack experience higher temperature rises due to heat generation, and the cells near the edge region of the battery pack experience lower temperature rises. Therefore, using a single heating film to heat all the cells in the energy storage battery module may result in uneven heating effect, which may result in that the cells in the central region have been overheated while the cells in the edge regions have not yet reached the normal allowable charging temperature. In the embodiment of the present disclosure, multiple sub-heating films are arranged in the system for heating a battery of an integrated household energy-storage machine, and sub-heating films with different resistances are provided for the cells at different positions, achieving different heating temperatures for cells at various positions, and thereby ensuring that the temperatures at different regions in the battery 102 rise uniformly.

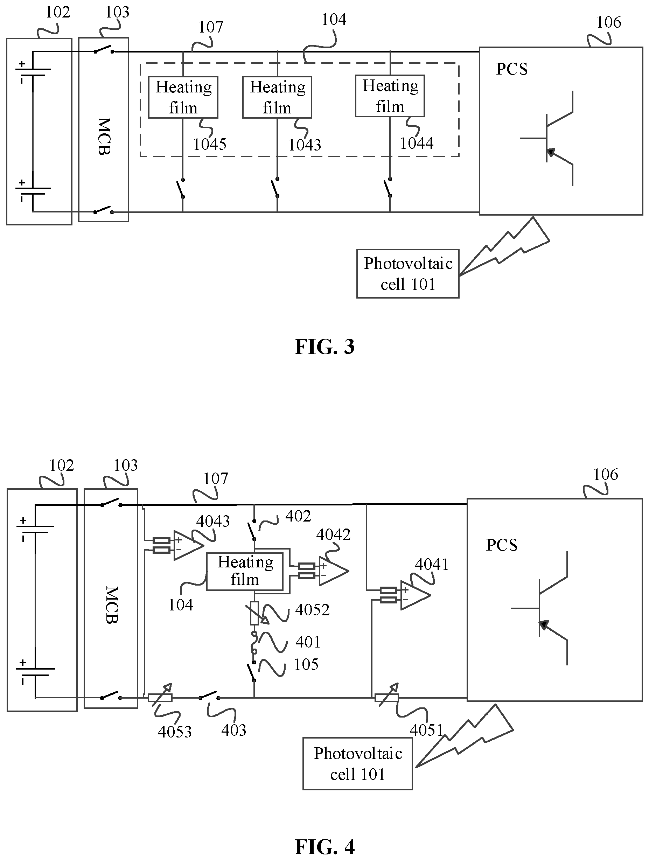

Reference is made to FIG. 3, which is a schematic structural diagram of a system for heating a battery of an integrated household energy-storage machine with multiple heating films connected in parallel according to an embodiment of the present disclosure. The heating film 104 may include a sub-heating film 1043 in the first branch and a sub-heating film 1044 and a sub-heating film 1045 which are arranged in different branches connected in parallel with the first branch. In an embodiment, a first switch may be configured for each of the sub-heating films in the multiple branches, or a common first switch may be configured for all the sub-heating films in the multiple branches. With the multiple sub-heating films connected in parallel, the impact, due to issues such as short circuits or open circuits in a single heating film, on the system for heating a battery of the integrated household energy-storage machine can be effectively reduced. Additionally, with the first switch configured for each of the sub-heating films in the branches, the connections between the sub-heating films in multiple branches and the direct-current bus can be controlled independently, so that the connection between the sub-heating films with abnormalities such as short circuits and the direct-current bus can be disconnected timely, facilitating maintenance operations such as replacing sub-heating films.

According to the embodiments of the present disclosure, a system for heating a battery of an integrated household energy-storage machine is provided. The system includes: a battery, a heating film, a first switch, a circuit breaker, a power conversion system, and a direct-current bus. The first switch and the heating film are connected in series to form a first branch. A first terminal of the battery, a first terminal of the circuit breaker, a first terminal of the first branch, and a first terminal of the power conversion system are sequentially connected. A second terminal of the battery, a second terminal of the circuit breaker, a second terminal of the first branch, and a second terminal of the power conversion system are sequentially connected to the direct-current bus. The power conversion system is configured to supply a direct-current power to the system via the direct-current bus, and regulate a voltage of the direct-current bus. The circuit breaker is configured to control a connection state of the battery and the direct-current bus. The first switch is configured to control a connection state if the heating film and the direct-current bus. The heating film is configured to heat the battery. Therefore, a power conversion system and a direct-current bus are arranged in the system for heating the battery of the integrated household energy-storage machine, so that the battery can be heated by using the power supplied from a power grid, or the battery can be heated by using the direct-current power when grid outages, thereby meeting the requirement for heating battery during power grid outages. Furthermore, the power conversion system can regulate the voltage of the direct-current bus, so that the heating power of the heating film can be regulated, thereby ensuring a stable, safe, and controllable heating process for the battery.

Reference is made to FIG. 4, which is a schematic structural diagram of a system for heating a battery of an integrated household energy-storage machine according to another embodiment of the present disclosure. The system includes: a photovoltaic cell 101, a battery 102, a circuit breaker 103, a heating film 104, a first switch 105, a power conversion system 106, a direct-current bus 107, a fuse 401, a second switch 402, a third switch 403, a first voltage detection unit 4041, a second voltage detection unit 4042, a third voltage detection unit 4043, a first current sensor 4051, a second current sensor 4052, and a third current sensor 4053.

The fuse 401 is connected in series between the heating film 104 and the first switch 105.

A fuse may be blow when an excessive current occurs in the branch where the fuse is located due to conditions such as a short circuit, thereby providing short-circuit protection for the system. It should be understood that in the system according to the embodiments of the present disclosure, a fuse 401 may be connected in series between the heating film 104 and the first switch 105, and other fuses may be arranged in the circuit, providing short-circuit protection or overcurrent protection for the system. For example, when the system includes multiple sub-heating films connected in parallel, a fuse may be arranged in each of parallel branches.

The second switch 402 is connected in series with the heating film 104, and the heating film 104 is connected in series between the first switch 105 and the second switch 402.

Therefore, two or more switches are arranged in one branch, it may be determined whether sticking issues exist in the switches before the system starts heating. After it is determined that there are no issues, the system starts heating, thereby avoiding the inability to disconnected the switches when heating should be stopped.

For example, the first switch 105 is closed, then if the voltage detected by the first voltage detection unit 4041 is consistent with the voltage detected by the second voltage detection unit 4042, it indicates that the voltage across the heating film 104 is equal to the voltage of the direct-current bus, and it may be determined that the second switch 402 has a sticking issue; and if the voltage detected by the first voltage detection unit 4041 differs from the voltage detected by the second voltage detection unit 4042, it may be determined that the second switch 402 operates normally. Then, the first switch 105 is opened, the second switch 402 is closed, and the above steps are performed to determine whether the first switch 105 has a sticking issue. It should be understood that by performing the similar steps, it may be determined whether the third switch 403 has a sticking issue.

Thus, before heating the battery 102, it may be determined whether the switches in the system for heating a battery of the integrated household energy-storage machine have a sticking issue. After determining that all the switches have no sticking issue, the switches are closed, and the heating film 104 draws power from the direct-current bus 107 to heat the battery 102, thereby avoiding the inability to disconnect the corresponding components from the direct-current bus in case of malfunction due to switch sticking, and enhancing the safety of the system.

A first terminal of the third switch 403 is connected to the first terminal of the circuit breaker 103, and a second terminal of the third switch 403 is connected to the first terminal of the first branch 110.

By using the third switch 403, the circuit breaker and the battery can be disconnected from the direct-current bus in the case that the circuit breaker fails and cannot disconnect the connection between the battery from the direct-current bus or in the cases such as t an internal short circuit in the circuit breaker.

In an embodiment, the first switch 105, the second switch 402, and the third switch 403 may be the same or different, and the first switch 105, the second switch 402, and the third switch 403 may be one or more of relays, MOS devices, and IGBT devices.

The first voltage detection unit 4041 is connected in parallel with the power conversion system. A first terminal of the first voltage detection unit 4041 is connected to the first terminal of the power conversion system 106, and a second terminal of the first voltage detection unit 4041 is connected to the second terminal of the power conversion system 106.

The voltage detection unit may be an operation amplifier used to detect a voltage at a corresponding position. The first voltage detection unit 4041 is configured to detect the voltage on the side of the direct-current bus 107.

The second voltage detection unit 4042 is connected in parallel with the heating film 104.

The second voltage detection unit 4042 is configured to detect the voltage across the heating film 104.

The third voltage detection unit 4043 is connected in parallel with the circuit breaker 103. A first terminal of the third voltage detection unit 4043 is connected between the first terminal of the circuit breaker 103 and the first terminal of the third switch 403.

The third voltage detection unit 4043 is configured to detect the voltage on the side of the battery 102.

In an embodiment, when the circuit breaker 103 is closed, the voltages at corresponding positions are detected by the voltage detection units.

A first terminal of the first current sensor 4051 is connected to the first terminal of the first voltage detection unit 4041, and a second terminal of the first current sensor 4051 is connected to the first terminal of the power conversion system 106.

The second current sensor 4052 is connected in series in the first branch.

The third current sensor 4053 is connected in series with the third switch 403.

In an embodiment, currents at corresponding positions may be collected by the current sensors, to determine whether a short-circuit issue or an open-circuit issue occurs in a corresponding branch during the heating process.

In an embodiment, in responding to the heating film 104 including one heating film or multiple sub-heating films connected in series in the first branch, when one or more of these sub-heating films are short circuited, the load resistance in the system decreases, and the output power of the power conversion system 106 increases. The current in the first branch 110 may be detected by using a Hall sensor, a current shunt, or other current sensors. When detecting a high current, it indicates a sub-heating film in the first branch is short circuited. When detecting no current or voltage in the first branch, it indicates that the first branch is open circuited. Additionally, in response to the current in the first branch exceeding a predetermined safety threshold due to a short-circuited sub-heating film, the fuse 401 is blow, and then the first branch is disconnected from the direct-current bus, thereby providing short-circuit protection for the system by using the fuse 401.

In response to the heating film 104 including multiple sub-heating films connected in parallel, the multiple sub-heating films are connected in parallel and then are connected in series with a fuse. When one or more of the multiple sub-heating films are short circuited, the first branch is short circuited, then the fuse 401 is blow to provide short-circuit protection for the system; and when one or more of the multiple sub-heating films are open circuited, the current collected by the current sensor and/or the voltage detected by the voltage detection unit change accordingly, thereby timely determining the open-circuit abnormalities in the sub-heating films by monitoring changes in the current and/or voltage at corresponding positions.

The embodiments in this specification are described in a progressive manner, each of the embodiments focuses on the differences from others, and references may be made among these embodiments with respect to the same or similar portions among these embodiments.

According to the description of the disclosed embodiments, those skilled in the art can implement or use the present disclosure. Various modifications to the embodiments are apparent to those skilled in the art, and general principles defined in the present disclosure can be implemented in other embodiments without departing from the spirit or scope of the present disclosure. Therefore, the present disclosure is not limited to the embodiments described herein, but should be in accordance with the broadest scope consistent with the principle and novel features disclosed herein.

## Claims

1. A system for heating a battery of an integrated household energy-storage machine, **characterized in that**:
the system comprises: a battery, a heating film, a first switch, a circuit breaker, a power conversion system, and a direct-current bus,
the first switch and the heating film are connected in series to form a first branch;
a first terminal of the battery, a first terminal of the circuit breaker, a first terminal of the first branch, and a first terminal of the power conversion system are sequentially connected, and a second terminal of the battery, a second terminal of the circuit breaker, a second terminal of the first branch, and a second terminal of the power conversion system are sequentially connected to the direct-current bus;
the power conversion system is configured to supply a direct-current power to the system through the direct-current bus, and regulate a voltage of the direct-current bus;
the circuit breaker is configured to control a connection state of the battery and the direct-current bus;
the first switch is configured to control a connection state of the heating film and the direct-current bus; and
the heating film is configured to heat the battery.

2. The system according to claim 1, further comprising: a fuse, wherein
the fuse is connected in series between the heating film and the first switch; and
the fuse is configured to provide short-circuit protection for the heating film.

3. The system according to claim 1, further comprising: a second switch, a first voltage detection unit, and a second voltage detection unit, wherein
the second switch is connected in series with the heating film, and the heating film is connected in series between the first switch and the second switch;
the first voltage detection unit is connected in parallel with the power conversion system, a first terminal of the first voltage detection unit is connected to the first terminal of the power conversion system, and a second terminal of the first voltage detection unit is connected to the second terminal of the power conversion system; and
the second voltage detection unit is connected in parallel with the heating film.

4. The system according to claim 3, further comprising: a first current sensor, wherein
a first terminal of the first current sensor is connected to the first terminal of the first voltage detection unit, and a second terminal of the first current sensor is connected to the first terminal of the power conversion system.

5. The system according to any one of claims 1 to 4, further comprising: a second current sensor, wherein
the second current sensor is connected in series in the first branch.

6. The system according to claim 1, further comprising: a third switch, wherein
a first terminal of the third switch is connected to the first terminal of the circuit breaker, and a second terminal of the third switch is connected to the first terminal of the first branch.

7. The system according to claim 6, further comprising: a third voltage detection unit, wherein
the third voltage detection unit is connected in parallel with the circuit breaker, and a first terminal of the third voltage detection unit is connected between the first terminal of the circuit breaker and the first terminal of the third switch.

8. The system according to claim 6, further comprising: a third current sensor, wherein
the third current sensor is connected in series with the third switch.

9. The system according to claim 1, wherein the heating film comprises a plurality of sub-heating films connected in series in the first branch.

10. The system according to claim 1, wherein the heating film comprises a plurality of sub-heating films connected in parallel.

11. The system according to claim 1, wherein the first switch is a circuit breaker, a MOS device, or an IGBT device.

12. The system according to claim 1, wherein the power conversion system is configured to supply a direct-current power from a photovoltaic cell to the system via the direct-current bus, and the photovoltaic cell is electrically connected to the power conversion system.
